# EUROPEAN PATENT SPECIFICATION

(11) **EP 1 507 074 B1**
(45) Date of publication and mention of the grant of the patent: **10.01.2018**
(21) Application number: 04019205.6
(22) Date of filing: 12.08.2004
(51) Int. Cl.: F02B 61/02, F02B 63/04, F02P 1/06, F16D 3/00, H02K 7/18

(54) **Engine power generator and vehicle**
Brennkraftmaschinengetriebener Stromerzeuger und Fahrzeug
Génératrice entraînée par un moteur à combustion interne et véhicule

(30) Priority: 12.08.2003 JP 2003207285; 21.07.2004 JP 2004213143
(43) Date of publication of application: 16.02.2005
(73) Proprietor: Yamaha Hatsudoki Kabushiki Kaisha, Iwata-shi, Shizuoka-ken (JP)
(72) Inventor: Fujiwara, Hideki, Iwata-shi Shizuoka-ken (JP); Nakajima, Akitoshi, Iwata-shi Shizuoka-ken (JP)
(74) Representative: Grünecker Patent- und Rechtsanwälte PartG mbB

(56) References cited:
- FR-A- 2 836 425
- FR-A- 2 839 758
- US-A- 2 500 281
- US-A- 4 945 271

## Description

The present invention relates to an engine power generator according to the preamble of independent claim 1. Further, the invention relates to a vehicle, in particular a motorcycle, comprising an engine and a propulsion unit.

Such an engine power generator can be taken from the prior art document US 4,945,271. Said power generator comprises a speed increasing gear train, a torque damper and an elastic coupling which are interposed in series between a crankshaft of an engine and a rotor shaft of a generator. Both, the rotor shaft and the generator driving shaft partly penetrate a center axis of the elastic coupling and are coaxial with each other.

A vehicle and any engine power generator of this kind is disclosed, for example, in JP-A-2000-45921. This engine power generator is provided coaxially with the crankshaft in a crankcase of an engine for a motorcycle. It is covered by a cover mounted to the end of the crankcase on the left side with respect to a vehicle body so as to project outwardly of the vehicle body, and includes a stator fixed to the inside of the cover and a rotor fixed to the end of the crankshaft on the left side with respect to the vehicle body.

The rotor is formed into a bottomed cylindrical shape opening toward the left side with respect to the vehicle body, and the crankshaft is coaxially fixed to a boss located at the axial center thereof. The structure to fix the rotor to the crankshaft employs a structure to secure it in a state of fitting the boss to a tapered surface formed on the crankshaft. The stator is supported by the cover and inserted into the interior of the rotor from the outside with respect to the vehicle body.

In addition to the structure having the engine power generator provided at the end of the crankshaft as described above, JP-A-5-91693 discloses a motorcycle in which the engine power generator is provided rearwardly of a cylinder of the engine and upwardly of the crankcase with respect to the vehicle body. This power generator includes an annular stator mounted to a vertical wall of the crankcase extending in the vertical direction and fixed to the inside of the cover, which is mounted to the vertical wall from the left side with respect to the vehicle body, a rotor rotating inside the axial center of the stator, and so on.

The rotor includes a shaft extending in parallel with the crankshaft and an exciting coil, and is rotatably supported at both ends thereof by the cover and the vertical wall of the crankcase. The shaft of the rotor, which is connected at the end on the inner side with respect to the vehicle body to a drive shaft by spline fitting, is connected to the crankshaft via the drive shaft and a chain.

It has been desired to further reduce size and weight of the power generator to be mounted to a motorcycle. However, these engine power generators in the related art configured as described above have a limit in reduction in size and weight by reducing the outer diameter of the rotor. In other words, when the diameter of the cylindrical portion of the rotor is further reduced, the size of the stator itself is reduced correspondingly, and hence the power generating capability is also lowered, and, when the diameter of the revolving shaft of the rotor is further reduced, a power for rotating the rotor at high speed may not be transmitted in view of the strength thereof.

It is, therefore, an object of the invention to provide an engine power generator as indicated above having a reduced size and weight while preventing the function from being impaired. It is further an object of the invention to provide a vehicle, in particular a motorcycle, in which the center of gravity of a vehicle body can be lowered while preferably securing a wide bank angle.

This object is solved in an inventive manner by an engine power generator having the features of independent claim 1.

Thereby, the engine power is transmitted to the rotor without the intermediary of the revolving shaft.

Since, according to the present invention, the power force of the engine can be transmitted without using the shaft of the rotor, the shaft of the rotor is not necessary to transmit the drive force from the crankshaft to the rotor, and hence is only required to have the minimum rigidity for supporting the members to be mounted to this shaft.

Therefore, since the shaft of the rotor can be formed to be small in diameter and weight, reduction in size and weight of the engine power generator is achieved while preventing a power generating function from being impaired.

Preferably, the transmitting means comprises a driven side gear as driven member located coaxially with the rotor and being connected for movement in association with one end surface of the rotor.

According to the invention, the engine power transmitted from a drive side gear engaging with the driven side gear is transmitted from the driven gear.to the rotor.

According to a preferred embodiment, the rotor and the driven member of the transmitting means are formed separately. Therein, preferably the engine power is transmitted from the driven member to the rotor via a damper member disposed between an end surface of the rotor in the axial direction and the driven member, wherein further preferably the end surface of the rotor in the axial direction, the damper member, and the driven member are aligned in the axial direction.

According to a further preferred embodiment, an engaging portion between the rotor and the driven member is positioned on a side of an outer peripheral portion of a damper member positioned between the rotor and the driven member.

Moreover, preferably the revolving shaft is rotatably supported by an engine side at positions at a distance longer than an axial length of the rotor, wherein preferably the revolving shaft is press-fitted into the rotor. Still further preferably, the revolving shaft penetrating through both of the rotor and the driven member is supported to an engine side of the generator by both sides thereof.

Moreover, it is preferred that an interior of the revolving shaft comprises an oil path which preferably extends at least from one end of the rotor on the side of the driven member to the other end of the rotor opposite from the driven member.

Since the engine power is transmitted from the drive side gear to one end surface of the rotor of the power generator in the axial direction via the driven side gear, the outer diameter of the rotor can be reduced in comparison with the case in which the driven side gear is connected to the outer peripheral portion of the rotor for transmitting the engine power to the rotor. Therefore, the power generator can further be downsized.

Further, since the engine power can be transmitted from the driven member to the rotor via the damper along the direction of the axis of the rotor, the structure of the drive force transmitting system can be simplified. Therefore, the drive force transmitting system can be compactly formed. Also, since the impact exerted to the connecting portion between the engine side and the driven member due to the change of the rotation of the engine can be alleviated by the damper, the strength required for the driven member may be smaller than the case where the damper is not provided, and hence reduction in size and weight of the driven member is achieved.

Moreover, the thickness of the axial center of the driven member can be relatively reduced in comparison with the case in which the driven member is supported only by the axial center thereof so as to prevent inclination of the driven member with respect to the revolving shaft. Therefore, the size of the power generator in the axial direction can be reduced.

Furthermore, the distance between the bearings for rotatably supporting one end and the other end of the revolving member is wider than the case in which the rotor turns over on the revolving shaft, and hence the revolving member can be strongly supported.

Advantageously, the structure for supporting the portion including the rotor and the driven member is simplified.

Thereby, it is possible that the stator can be cooled by oil flowing in the revolving shaft when the stator is disposed on the other end in the direction of the axis of the rotor.

For a vehicle of the above kind, the object is solved in an inventive manner in that the vehicle further comprises an engine power generator according to at least one of the claims 1 to 10 9.

Since the engine power generator which is reduced in size and weight is equipped, the position of the center of gravity of the engine can be set to a low level, and the engine can be formed to be compact in the direction of the width of the vehicle, wherein in particular a motorcycle in which the bank angle is wide and the center of gravity of the vehicle body is lowered can be provided.

Further preferred embodiments are subject to the respective subclaims.

In the following, the invention will be described in greater detail by means of an embodiment thereof with reference to the accompanying drawings, wherein:

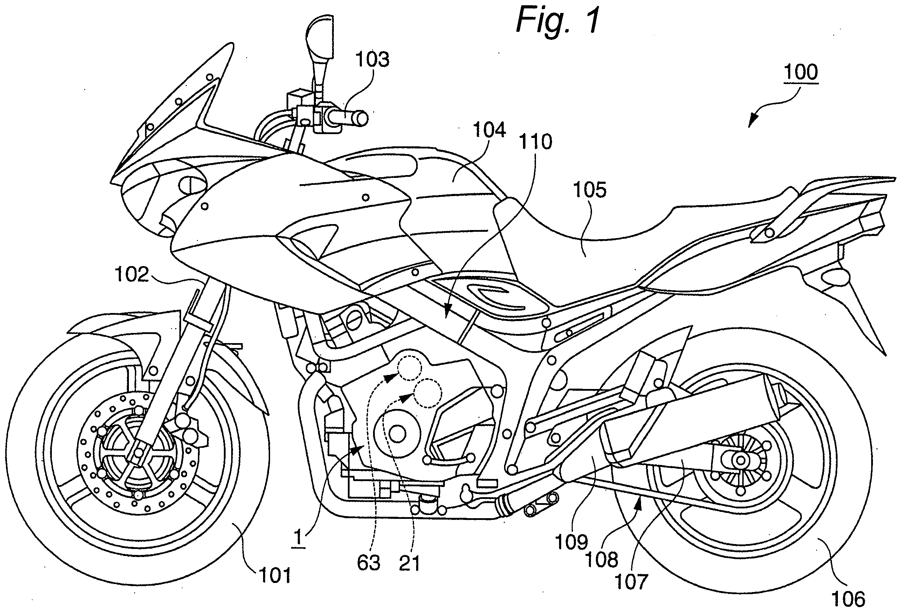

- Fig. 1: is a side view of a motorcycle equipped with a power generator according to the present invention;
- Fig. 2: is a side view showing the structure of the engine for a motorcycle provided with the power generator according to the present invention;
- Fig. 3: is a plan view of a crankshaft and the power generator; and
- Fig. 4: is a cross-sectional view of a power generator according to the present invention.

In these drawings, reference numeral 100 designates a motorcycle according to the present embodiment. Reference numeral 101 designates a front wheel of the motorcycle 100, reference numeral 102 designates a front fork, reference numeral 103 designates a steering handle, reference numeral 104 designates a fuel tank, reference numeral 105 designates a seat, reference numeral 106 designates a rear wheel, reference numeral 107 designates a rear arm, reference numeral 108 designates a rear wheel drive chain-type transmission device, reference numeral 109 designates a muffler, and reference numeral 110 designates a vehicle body frame. Mounted between the front wheel 101 and the rear wheel 106 of the motorcycle 100 is an engine 1 for a motorcycle in which a power generator according to the present embodiment is provided.

The engine 1 is a water-cooled four-cycle four-cylinder type and is mounted to the vehicle body frame 110 of the motor cycle so that the axis of a crankshaft 2 extends in parallel with the direction of the width of the vehicle. A cylinder 3 of the engine 1 is formed so that the cylinder axis extends obliquely upward from the crankshaft 2 toward the front.

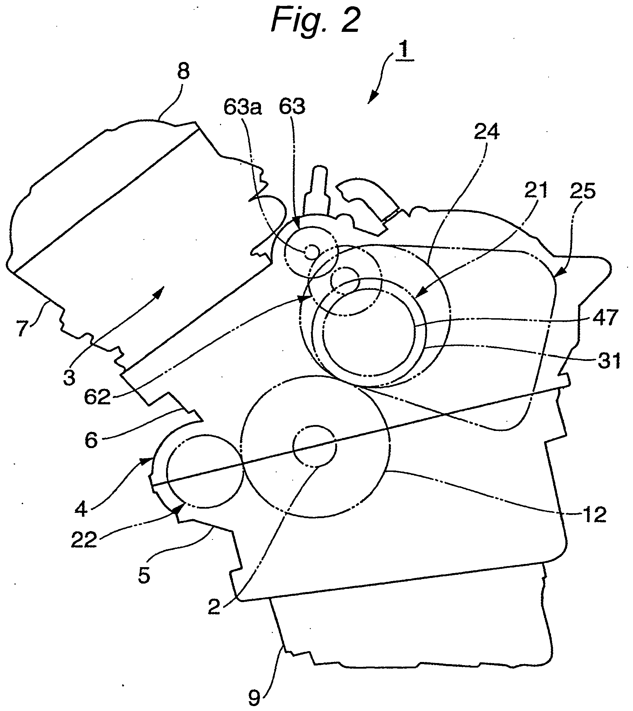

A crankcase 4 rotatably supporting the crankshaft 2 is formed so as to be dividable into a lower crankcase 5 and an upper crankcase 6. In Fig. 2, reference numeral 7 designates a cylinder head, reference numeral 8 designates a head cover, and reference numeral 9 designates an oil pan.

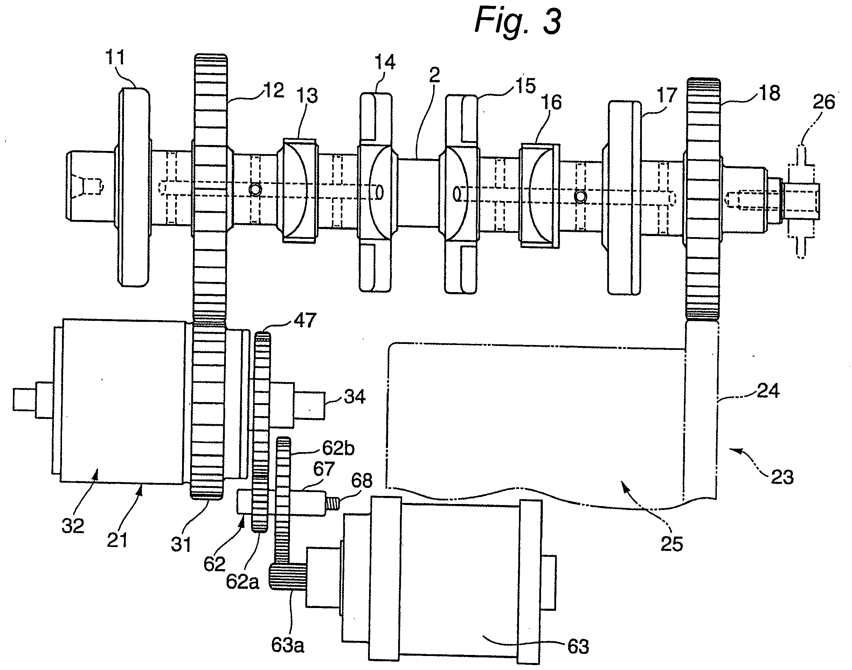

The crankshaft 2 is provided with crank webs 11-18 at eight positions in the axial direction as shown in Fig. 3, and a #2 web 12 located at the second position from the left in the drawing, and a #8 web 18 located at the right most position constitute gears, respectively.

The gear formed of the #2 web 12 is connected to a power generator 21 according to the present invention and a balancer 22 (See Fig. 2). The balancer 22 has a structure such that a balance weight is provided on a revolving shaft extending widthwise of the vehicle in front of the crankshaft 2, though not shown, and the gear of the revolving shaft engages the gear formed of the #2 web 12. On the other hand, a rear wheel drive system 23 is connected to the gear formed of the #8 web 18 of the crankshaft 2 as shown in Fig. 3. A drive side gear according to the present invention is composed of the gear formed of the # 2 web 12 in this embodiment.

The rear wheel drive system 23 connected to the gear formed of the #8 web 18 is configured equally with the one to be provided on the engine of the motorcycle in the related art. In other words, the rear wheel drive system 23 includes a decelerating large gear 24 engaging the gear formed of the #8 web 18, a clutch (not shown) provided on the decelerating large gear 24 on the right side of the vehicle so as to be positioned coaxially therewith, a multi-step transmission 25 having an input shaft provided on the left side with respect to the vehicle body coaxially with the deceleration large gear 24 and an output shaft extending in parallel therewith, and the chain-type transmitting device 108 for transmitting the power from the output shaft to the rear wheel 106. As shown in Fig. 3, a sprocket 26 for winding a timing chain (not shown) for driving the valve gear is attached to the end of the crankshaft 2 on the right side with respect to the vehicle body.

As shown in Fig. 2, the power generator 21 is disposed near behind the crankshaft 2, that is, behind the crankshaft 2 obliquely upward thereof and the rearwardly of the cylinder 3 so that the direction of the axis thereof extends in parallel with the crankshaft 2. The mounting position of the power generator 21 according to the present embodiment is set so that the input shaft portions (the end on the front side with respect to the vehicle body) of the power generator 21 and the transmission 25 are disposed on the left side with respect to the vehicle body and the right side with respect to the vehicle body.

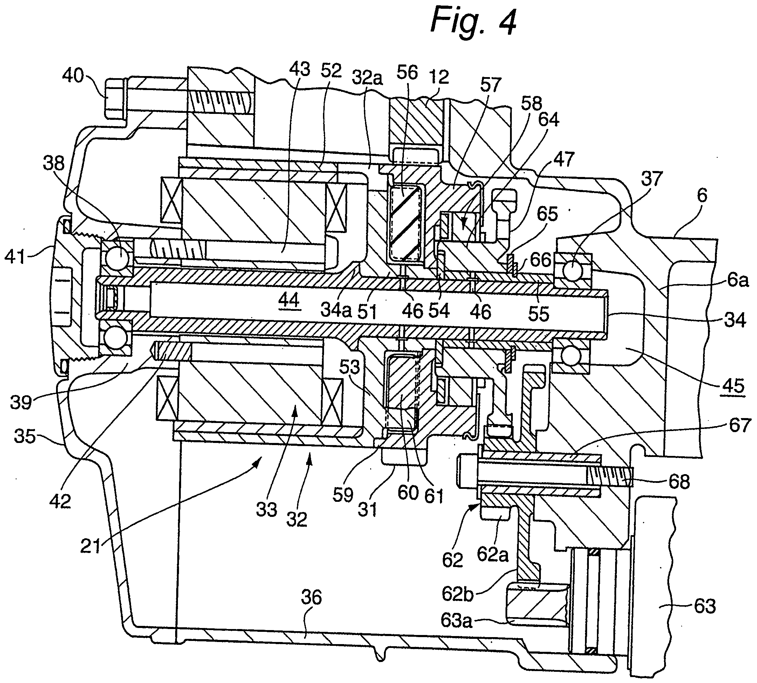

As shown in Fig. 4, the power generator 21 includes a driven side gear 31 engaging the gear formed of the #2 web 12, the rotor 32 and the stator 33 positioned on the left side of the driven side gear 31 (left side also in Fig. 4) with respect to the vehicle body, the revolving shaft 34 for supporting the driven side gear 31 and the rotor 32, and a cover 35 cooperating with an upper crankcase 6 to rotatably support the revolving shaft 34, and is stored inside a power generator housing 36 of the upper crankcase 6. The transmission means according to the present invention is composed of the gear formed of the #2 web 12 and the driven side gear 31 in this embodiment.

The revolving shaft 34 of the power generator 21 is rotatably supported at the end thereof on the right side with respect to the vehicle body by a vertical wall 6a of the upper crankcase on the left side with respect to the vehicle body via a bearing 37 while the end thereof on the left side with respect to the vehicle body is rotably supported to the cover 35 via the bearing 38. The cover 35 is formed with a boss 39 for mounting the bearing 38 on the left side with respect to the vehicle body and the stator 33 at the center thereof, and is fixed to the upper crankcase 6 with a fixing bolt 40.

The outer periphery of the cover 35 is formed into a bowl shape opening toward the right side with respect to the vehicle body, and is in tight contact with the power motor housing 36 of the upper crankcase 6 over the entire area so that the interior of the cover and the exterior of the cover are partitioned in liquid-tight manner. The boss 39 of the cover 35 is formed into a cylindrical shape, into the hollow portion of which the baring 38 is fitted from the left side with respect to the vehicle body, and the stator 33 is mounted to the end surface on the right side with respect to the vehicle body from the right side with respect to the vehicle body. A cap 41 is screwed on the opening at the end of the boss 39 on the left side with respect to the vehicle body.

The stator 33 is formed into an annular shape having a hollow portion of larger in diameter than the revolving shaft 34, and is fixed to the boss 39 in such a manner that the revolving shaft 34 is penetrated into the hollow portion and inserted into the interior of the rotor 32, described later. Fixation of the stator 33 to the boss 39 is achieved by positioning the stator 33 with respect to the boss 39 by a knock pin designated by reference numeral 42 in Fig. 4, and screwing a fixing bolt 43 penetrated through the stator 33 into the boss 39. The knock pin 42 and the fixing bolt 43 are provided on the inner peripheral portion of the stator 33 at the position aligning with the bearing 38 when viewed in the direction of the axis of the revolving shaft 34.

At the axial center of the revolving shaft 34, there is formed an oil path 44 so as to penetrate the revolving shaft 34 in the axial direction. The oil path 44 is in communication with an oil chamber 45 of the upper crankcase 6 at the end on the right side with respect to the vehicle body, and oil is supplied from an oil pump (not shown) via the oil chamber 45. The oil supplied to the oil path 44 is supplied to a supporting portion between a driven side gear 31 and a starter gear 47 described later through a plurality of branch paths 46 extending radially of the revolving shaft 34 and supplied to the bearing 38 through an inward space of the cap 41 from the end of the oil path 44 on the left side with respect to the vehicle body. The oil supplied to the bearing 38 flows rightward with respect to the vehicle body through minute gaps between the inner and outer wheels, between the revolving shaft 34 and the boss 39, and between the revolving shaft 34 and the stator 33 and flown into the rotor 32. The oil flown into the rotor 32 is flown into the housing 36 through a notch 32a formed on the outer peripheral portion of the rotor 32, and from here, it passes through a path, not shown, and goes back to an oil pan 9.

The rotor 32 of the power generator 21 is formed into a bottomed cylindrical shape opening toward the left with respect to the vehicle body as shown in Fig. 4, and is fixed to the revolving shaft 34 by press-fitting the revolving shaft 34 into a boss 51 at the axial center so as to rotate integrally therewith. The outer peripheral portion of the rotor 32 includes a permanent magnet 52 secured on the inner peripheral surface thereof and has a diameter which can accommodate the stator 33.

The boss 51 of the rotor 32 is formed so as to project rightward and leftward with respect to the vehicle body from a bottom wall 53 of the rotor 32 having a bottomed cylindrical shape. The end of the boss 51 on the left side with respect to the vehicle body abuts against a stopper 34a formed integrally with the revolving shaft 34 from the right side with respect to the vehicle body. A sleeve 55 is connected to the end of the boss 51 on the right side with respect to the vehicle body via a spacer 54. The spacer 54 and the sleeve 55 are rotatably fitted to the revolving shaft 34, and interposed between the bearing 37 which supports the end of the revolving shaft 34 on the right side with respect to the vehicle body and the boss 51 thereby restraining movement of the boss 51 rightward with respect to the vehicle body.

The driven side gear 31 is rotatably supported by a portion of the boss 51 of the rotor 32 projecting rightward with respect to the vehicle body from the bottom wall 53. An end of the driven side gear 31 on the left side with respect to the vehicle body is connected so that the rotor 32 moves in conjunction therewith via a shock absorbing damper rubber 56, described later. On the other hand, a cylindrical member 57 is provided so as to project coaxially from the other side of the driven side gear 31 on the right side with respect to the vehicle body, and the starter gear 47 is connected thereto via a one-way clutch 58 mounted in the interior of the cylindrical member 57.

An annular projection 59 projecting leftward with respect to the vehicle body is formed integrally with the outer peripheral portion of the driven side gear 31. The annular projection 59 is rotatably fitted to the outer peripheral portion of the bottom wall 53 of the rotor 32 so that the driven gear 31 is positioned coaxially with the rotor 32. An engaging portion, which was described before is composed of this fitting portion. In addition, as shown in Fig. 2, the driven side gear 31 is formed to have an outer diameter smaller than that of the gear formed of the #2 web 12. Therefore, the driven side gear 31 rotates at a speed faster than the crankshaft 2.

The damper rubber 56 is interposed between a transmission wall 60 projecting from the driven side gear 31 leftward with respect to the vehicle body and a transmission wall 61 projecting from the bottom wall 53 of the rotor 32 rightward with respect to the vehicle body as is known from a shaft coupling in the related art. Although not shown in the drawing, there are a plurality of the transmission walls 60 of the driven side gear 31 formed radially when viewed in the axial direction and there are a plurality of the transmission walls 61 of the rotor 32 formed so as to face between the adjacent ones of the plurality of transmission walls 60, 60... of the driven side gear 31.

In this manner, since the rotor 32 is connected to the driven side gear 31 via the damper rubber 56, an impact which is transmitted to the rotor 32 from the driven side gear 31 when a sudden change in rotation of the crankshaft 2 occurs can be alleviated by the damper rubber 56.

The starter gear 47 is rotatably supported by the sleeve 55 on the revolving shaft 34, and a starter motor 63 is engaged via an intermediate gear 62, described later. A boss 64 at the axial center of the starter gear 47 is formed so as to face the interior of the cylindrical member 57 of the driven side gear 31 at the end on the left side with respect to the vehicle body. The one-way clutch 58 is interposed between the boss 64 and the cylindrical member 57. The one-way clutch 58 is adapted to transmit a power from the starter gear 47 only to the driven side gear 31.

The boss 64 of the starter gear 47 is positioned between the spacer 54 on the revolving shaft 34 and a spacer 65 on the sleeve 55, and axial movement thereof is restrained by both of the spacers 54, 65. The spacer 65 on the sleeve 55 is restrained so as not to come off by a snap ring 66 locked on the sleeve 55.

The intermediate gear 62 includes a smaller diameter gear 62a engaging the starter gear 47 and a larger diameter gear 62b engaging a pinion 63a of the starter motor 63 formed integrally with each other, and is rotatably supported by a cylindrical supporting shaft 67 and a fixing bolt 68 to the vertical wall 6a of the upper crankcase 6. The starter motor 63 is disposed above the crankshaft 2 at the center in the widthwise direction of the vehicle body as shown in Fig. 2 and Fig. 3. The rotation of the starter motor 63 is transmitted to the crankshaft 2 via a power transmitting system composed of the pinion 63a, the intermediate gear 62, the starter gear 47, the one-way clutch 58, and the driven side gear 31.

In the engine 1 for a motorcycle configured as described above, the rotation of the crankshaft 2 is transmitted from the #2 web 12 to the driven side gear 31, and from the driven side gear 31 solely or practically solely via the damper rubber 56 to the rotor 32, whereby the power generator 21 is driven. At this time, the power is transmitted to the transmission wall 61 of the rotor 32 from the transmission wall 60 of the driven side gear 31 via the damper rubber 56. In other words, in the engine power generator 21, transmission of the power from the driven side gear 31 to the rotor 32, which are apart from each other in the axial direction, is achieved without using the revolving shaft 34 of the rotor 32 as power transmitting part.

Therefore, the revolving shaft 34 can be formed so as to have minimum rigidity required for supporting the respective members (the rotor 32 or the driven side gear 31) provided on the shaft. Consequently, the revolving shaft 34 can be formed to have a smaller outer diameter and lesser weight compared to the rotor shaft of the power generator in the related art to which the power is transmitted.

The engine 1 for a motorcycle in the present embodiment can be disposed so that the center of gravity of the engine itself is located at a relatively lower level even though the power generator 21 is disposed at a relatively higher level from the fact that the weight of the revolving shaft 34 can be reduced and the fact that the weight of the power transmitting system can be reduced by employing the structure in which the rotation of the crankshaft 2 is transmitted directly to the power generator 21 without the intermediary of parts such as a chain. As a consequence, the center of gravity of the vehicle body may be lowered by mounting the engine 1 at the low level on the vehicle body of the motorcycle 100. Since the power generator 21 of the engine 1 is provided near behind the crankshaft 2, the bank angle of the motorcycle 100 having the engine 1 mounted thereon is prevented from being reduced by the power generator 21.

According to the engine 1 for a motorcycle in the present embodiment, since the driven side gear 31 of the power generator 21 is engaged with the gear formed of the #2 web 12 of the crankshaft 2, and the decelerating large gear 24 is engaged with the #8 web 18, and the power generator 21 and the transmission 25 are aligned on one side and the other side in the direction of the width of the vehicle body, the weight balance of the engine in the direction of the width of the vehicle body is equalized by the power generator 21 and the transmission 25.

Therefore, the motorcycle 100 having the engine 1 in the present embodiment mounted thereon has its center of gravity at a low level at the widthwise center of the vehicle body.

According to the power motor 21 in the present embodiment, the outer diameter of the driven side gear 31 is smaller than the gear formed of the #2 web 12 of the crankshaft 2, and hence the rotor 32 rotates at a higher speed with respect to the crankshaft 2. Since the rotor 32 relatively rotates at high speed as described above, the power generator 21 can be formed so that the rotor 32 and the stator 33 can be formed to have a relatively smaller diameter. Therefore, the diameter of the power motor 21 can be reduced, and hence the distance between the shaft of the power generator 21 and the crankshaft 2 can be reduced while avoiding interference with the crankshaft 2. Consequently, the engine 1, which is compact as a whole, can be obtained.

Since the starter motor 63 is connected to the driven side gear 31 via the one-way clutch 58, the stator gear 47, and the intermediate gear 62, the engine 1 can be started by the use of the driven side gear 31 for transmitting the rotation of the crankshaft to the power generator 21. Therefore, the number of components can be reduced in comparison with the case of providing a starter-specific gear on the crankshaft 2 for allowing the starter mortar to mesh to this gear.

Since the driven side gear 31 is formed to be smaller in diameter than the gear formed of the #2 web 12, and the one-way clutch 58 is interposed between the driven side gear 31 and the starter gear 47, the one-way clutch 58 having a relatively small capacity may be used. This is because the rotation of the driven side gear 31 is reduced before being transmitted to the crankshaft 2 when the driven side gear 31 is rotated by the starter motor 63. Since the one-way clutch 58 which is relatively small in capacity and size can be used, downsizing of the power generator 21 is not impaired by the one-way clutch 58.

Since the rotor 32 is connected to the driven side gear 31 via the damper rubber 56, and an impact is alleviated by the damper rubber 56 when the change of the rotation of the crankshaft 2 is significantly large, the face width can be reduced correspondingly. In addition, since the annular projection 59 formed on the outer peripheral portion of the driven side gear 31 is fitted to the outer peripheral portion of the rotor 32, in comparison with the case in which the driven side gear 31 is supported so as not to incline with respect to the shaft 34 only by the axial center of the driven side gear 31, which corresponds to the portion rotatably supported by the boss 51 of the rotor 32, the thickness of this portion can be relatively thinner. Therefore, downsizing of the power generator 21 in the axial direction is achieved.

Since a power is not transmitted from the revolving shaft 34 side to the rotor 32 of the motor generator 21, a simple structure for mounting the revolving shaft 34 can be employed. In this embodiment, since the rotor 32 is mounted to the revolving shaft 34 by press-fitting, the mounting structure of the rotor 32 can be simplified in comparison with a fixing structure in which the rotor is fitted to the tapered surface of the revolving shaft is employed. In addition, since the rotor 32 is positioned on the revolving shaft 34 by a stopper 34a formed integrally on the revolving shaft 34, and the spacer 54 and the sleeve 55 attached to the revolving shaft 34, positioning is achieved simply without using the snap ring.

Since the sleeve 55 is rotatably fitted to the revolving shaft 34 and rotatably supports the starter gear 47, in the case in which there is a difference in number of revolution between the revolving shaft 34 and the starter gear 47, the sleeve 55 rotates as if it slips with respect to one or both of them. Therefore, the resistance generated on the sliding surface of the fitting portions on the inner peripheral side and on the outer peripheral side of the sleeve 55 can be reduced as much as possible. In addition, since the movement of the starter gear 47 toward the right with respect to the vehicle body of the starter gear 47 is restrained by the snap ring 66 locked on the sleeve 55 it is not necessary to provide an annular groove for the snap ring on the revolving shaft 34. Therefore, since the rigidity of the revolving shaft 34 can be increased, the revolving shaft 34 can be formed to have a further smaller outer diameter.

In addition, the power generator 21 in the present embodiment, since the bearing 38 for supporting the end of the revolving shaft 34 on the left side with respect to the vehicle body is fitted into the boss 39 from the left side with respect to the vehicle body and the stator 33 is supported by the inner peripheral portion of the boss 39, the stator 33 can be downsized in outer diameter, thereby reducing the diameter thereof. In other words, when the structure in which the bearing 38 is fitted into the boss 39 from the right side with respect to the vehicle body is employed, a fixing bolt 43 for fixing the stator 33 to the boss 39 has to be provided radially outwardly of the bearing 38, and hence the outer diameter of the stator 33 has to be increase correspondingly. However, with the structure of the present embodiment, the fixing bolt 43 can be positioned on the inner peripheral side so as to be aligned with the bearing 38 in the axial direction, so that the stator 33 can be formed into a relatively small size in diameter.

Since the power generator 21 is formed with the oil path 44 inside the revolving shaft 34, oil can be supplied simply to the members on the revolving shaft 34 (such as the driven side gear 31, the damper rubber 56, the starter gear 47, the one-way clutch 58). In addition, since the power generator 21 in the present embodiment is configured in such a manner that the oil is flown from the oil path 44 to the stator 33 side through the interior of the bearing 38 on the left side with respect to the vehicle body, the bearing 38 or the stator 33 can be cooled by the oil.

In the embodiment described above, an example in which the revolving shaft 34 is fitted into the boss 51 of the rotor 32 has been shown. However, the present invention is not limited thereto, and a structure in which the revolving shaft 34 is fixed to the engine side and the rotor 32 is rotatably supported by the shaft can be employed.

Since the power generator 21 in the present embodiment is configured in such a manner that the rotor 32 and the driven side gear 31 to which the power from the #2 web 12 of the engine 1 is transmitted are formed separately so that the power of the engine 1 is transmitted from the driven side gear 31 to the rotor 32 via the damper rubber 56 disposed between one end surface of the rotor 32 in the axial direction and the driven side gear 31, and the damper rubber 56 and the driven side gear 31 are aligned in the axial direction, the power of the engine 1 can be transmitted from the driven side gear 31 to the rotor 32 via the damper rubber 56 along the direction of the axis of the rotor 32. Therefore, the structure of the drive power transmitting system can be simplified. Also, the impact applied to the connecting portion between the engine side and the driven side gear 31 due to the change of the rotation of the engine 1 can be alleviated by the damper rubber 56.

According to the power generator 21 in the present embodiment, the engaging portion (fitting portion having the annular projection 59) between the rotor 32 and the driven side gear 31 is positioned on the outer peripheral side of the damper rubber 56, the thickness of the axial center of the driven side gear 31 can be relatively reduced in comparison with the case of supporting the driven side gear 31 only by the axial center thereof so that inclination of the driven side gear 31 with respect to the revolving shaft can be avoided.

Since the rotor 32 of the generator 21 in the present embodiment is press fitted into the revolving shaft 34 and the revolving shaft 34 is supported rotatably on the engine side at the positions at a distance longer than the axial length of the rotor 32, the distance between the bearings 37, 38 for rotatably supporting the one end and the other end of the revolving member is larger than the case in which the rotor 32 turns over on the revolving shaft. Therefore, the rigidity for supporting the rotor 32 is increased, whereby the rattling of the rotor 32 can be reduced.

According to the power generator 21 in the present embodiment, since the rotor 32 and the driven side gear 31 to which the power force is transmitted from the crankshaft 2 are formed separately, and the revolving shaft 34 is penetrated through both of the rotor 32 and the driven side gear 31 and is supported to the engine side by both sides thereof, the structure for supporting the portion including the rotor 32 and the driven side gear 31 can be simplified.

According to the power generator in the present embodiment, since the oil path 44 is formed inside the revolving shaft 34, and the oil path 44 is formed at least from one end of the rotor 32 on the side of the driven side gear 31 to the other end on the opposite side from the driven side gear, when the stator 33 is disposed on the other end of the rotor 32 in the axial direction, the stator 33 can be cooled by oil flowing in the revolving shaft 34.

As described above, an engine power generator is provided which is an engine power generator including transmitting means for transmitting an engine power to a rotor, the transmitting means being configured in such a manner that a revolving shaft is penetrated through the center axis of the rotor, and the rotor being rotatably supported on the engine side by the revolving shaft, so that the engine power is transmitted to the rotor without the intermediary of the revolving shaft.

In addition thereto, the engine power generator is configured in such a manner that the transmitting means includes a driven side gear located coaxially with the rotor and is connected so as to move in association with one end surface of the rotor in the axial direction, and a engine power transmitted from a drive side gear engaging with the driven side gear is transmitted from the driven gear to the rotor.

Further, the engine power generator is preferably configured in such a manner that the rotor and the driven member to which the engine power in the transmitting means is transmitted from a crankshaft of the engine are formed separately, and the engine power is transmitted from the driven member to the rotor via the damper disposed between one end surface of the rotor in the axial direction and the driven member, and the one end surface of the rotor in the axial direction, the damper, and the driven member are aligned in the axial direction.

Moreover, the engine power generator is preferably configured in such a manner that the engaging portion between the rotor and the driven member is positioned on the side of the outer peripheral portion of the damper.

Additionally, or alternatively, an engine power generator may be configured in such a manner that the rotor is press-fitted into the revolving shaft, and the revolving shaft is rotatably supported by the engine side at the positions at a distance longer than the axial length of the rotor.

In addition to any of the above embodiments, the engine power generator may be configured in such a manner that the rotor and the driven member to which the power is transmitted from the crankshaft are formed separately, and the revolving shaft is penetrated through both of the rotor and the driven member and is supported to the engine side by both sides thereof.

Therein, preferably the engine power generator is configured in such a manner that the interior of the revolving shaft is defined as an oil path, and the oil path is formed so as to extend at least from one end of the rotor on the side of the driven member to the other end opposite from the driven member.

As further described above, in order to form an engine power generator into a small and light configuration while preventing the function thereof from being impaired, an engine power generator is proposed, wherein a revolving shaft 34 is penetrated through the axial center of a rotor 32. The rotor 32 is rotatably supported to the engine side by the revolving shaft 34. Transmitting means (#2 web 12 and a driven side gear 31) for transmitting the engine power to the rotor 32 is provided.

## Claims

1. Engine power generator comprising:
a stator (33), a rotor (32), a driven side gear (31) for transmitting an engine power to the rotor (32), and a revolving shaft (34),
**characterized in that**
the revolving shaft (34) supports the driven side gear (31) and the rotor (32),
the driven side gear (31) is rotatably supported relative to the revolving shaft (34) penetrating a center axis of said driven side gear (31), and
engine power is transmitted from the driven side gear (31) to the rotor (32) via a damper member (56) disposed between an end surface of the rotor (32) in axial direction and the driven side gear (31), wherein engine power transmitted from a drive side gear (12) engaging with the driven side gear (31) is transmitted from the driven side gear (31) to the rotor (32).

2. Engine power generator according to claim 1, **characterized in that** the rotor (32) and the driven side gear (31) are formed separately.

3. Engine power generator according to claim 1 or 2, **characterized in that** the end surface of the rotor (32) in axial direction, the damper member (56), and the driven member (31) are aligned in axial direction.

4. Engine power generator according to at least one of claims 1 to 3, **characterized in that** an engaging portion (53,59) between the rotor (32) and the driven side gear (31) is positioned on a side of an outer peripheral portion of the damper member (56) positioned between the rotor (32) and the driven member (31).

5. Engine power generator according to at least one of claims 1 to 4, **characterized in that** the revolving shaft (34) is rotatably supported by an engine side at positions at a distance longer than an axial length of the rotor (32).

6. Engine power generator according to claim 5, **characterized in that** the revolving shaft (34) is press-fitted into the rotor (32).

7. Engine power generator according to at least one of claims 1 to 6, **characterized in that** the revolving shaft (34) penetrating through both of the rotor (32) and the driven side gear (31) is supported to an engine side of the generator by both sides thereof.

8. Engine power generator according to at least one of claims 1 to 7, **characterized in that** an interior of the revolving shaft (34) comprises an oil path (44).

9. Engine power generator according to claim 8, **characterized in that** the oil path (44) extends at least from one end of the rotor (32) on the side of the driven side gear (31) to the other end of the rotor (32) opposite from the driven side gear (31).

10. Vehicle, in particular a motorcycle, comprising an engine (1) and a propulsion unit (108), **characterized by** further comprising an engine power generator according to at least one of claims 1 to 9.

## Patentansprüche

1. Motor-Leistungs-Generator, der umfasst:
einen Stator (33), einen Rotor (32), ein Angetriebene-Seite-Zahnrad (31) zum Übertragen einer Motor-Leistung zu dem Rotor (32), und einer Drehwelle (34),
**dadurch gekennzeichnet, dass**
die Drehwelle (34) das Angetriebene-Seite-Zahnrad (31) und den Rotor (32) lagert,
das Angetriebene-Seite-Zahnrad (31) ist relativ drehbar zu der Drehwelle (34) gelagert,
die eine Mittenachse von diesem Angetriebene-Seite-Zahnrad (31) durchdringt, und
Motor-Leistung ist von dem Angetriebene-Seite-Zahnrad (31) zu dem Rotor (32) über ein Dämpfer-Element (56) übertragen, das zwischen einer Endfläche des Rotors (32) in Axialrichtung und dem Angetriebene-Seite-Zahnrad (31) positioniert ist, wobei Motor-Leistung, die von einem Antriebs-Seite-Zahnrad (12) übertragen ist, das mit dem Angetriebene-Seite-Zahnrad (31) in Eingriff ist, ist von dem Angetriebene-Seite-Zahnrad (31) zu dem Rotor (32) übertragen.

2. Motor-Leistungs-Generator gemäß Anspruch 1, **dadurch gekennzeichnet, dass** der Rotor (32) und das Angetriebene-Seite-Zahnrad (31) getrennt ausgebildet sind.

3. Motor-Leistungs-Generator gemäß Anspruch 1 oder 2, **dadurch gekennzeichnet, dass** die Endfläche des Rotors (32) in Axialrichtung, das Dämpfer-Element (56) und das angetriebene Element (31) in Axialrichtung ausgerichtet sind.

4. Motor-Leistungs-Generator gemäß zumindest einem der Ansprüche 1 bis 3, **dadurch gekennzeichnet, dass** ein Eingriffsabschnitt (53, 59) zwischen dem Rotor (32) und dem Angetriebene-Seite-Zahnrad (31) an einer Seite eines äußeren Umfangsabschnitt des Dämpfer-Elements (56) positioniert ist, der zwischen dem Rotor (32) und dem Angetriebene Element (31) positioniert ist.

5. Motor-Leistungs-Generator gemäß zumindest einem der Ansprüche 1 bis 4, **dadurch gekennzeichnet, dass** die Drehwelle (34) durch eine Motor-Seite an Positionen mit einem Abstand länger als eine axiale Länge des Rotors (32) drehbar gelagert ist.

6. Motor-Leistungs-Generator gemäß Anspruch 5, **dadurch gekennzeichnet, dass** die Drehwelle (34) in den Rotor (32) eingepresst ist.

7. Motor-Leistungs-Generator gemäß einem der Ansprüche 1 bis 6, **dadurch gekennzeichnet, dass** die Drehwelle (34), die durch beide von dem Rotor (32) und dem Angetriebene-Seite-Zahnrad (31) hindurchtritt, an einer Motor-Seite des Generators durch beide Seiten desselben gelagert ist.

8. Motor-Leistungs-Generator gemäß zumindest einem der Ansprüche 1 bis 7, **dadurch gekennzeichnet, dass** ein Inneres der Drehwelle (34) einen Ölpfad (44) umfasst.

9. Motor-Leistungs-Generator gemäß Anspruch 8, **dadurch gekennzeichnet, dass** der Ölpfad (44) sich zumindest von einem Ende des Rotors (32) an der Seite des Angetriebene-Seite-Zahnrads (31) zu dem anderen Ende des Rotors (32), gegenüber von dem Angetriebene-Seite-Zahnrad (31), erstreckt.

10. Fahrzeug, insbesondere ein Motorrad, das einen Motor 1 und eine Vortriebseinheit (108) umfasst, **gekennzeichnet durch** weiteres Umfassen eines Motor-Leistungs-Generators gemäß zumindest einem der Ansprüche 1 bis 9.

## Revendications

1. Générateur électrique de moteur comprenant :
un stator (33), un rotor (32), un pignon latéral entraîné (31) pour la transmission d'une puissance motrice au rotor (32), et un arbre tournant (34),
**caractérisé en ce que**
l'arbre tournant (34) soutient le pignon latéral entraîné (31) et le rotor (32),
le pignon latéral entraîné (31) est soutenu dans sa rotation par rapport à l'arbre tournant (34) pénétrant un axe central d'un dit pignon latéral entraîné (31), et
une puissance motrice est transmise du pignon latéral entraîné (31) au rotor (32) via un élément amortisseur (56) installé entre une surface d'extrémité du rotor (32) dans une direction axiale et le pignon latéral entraîné (31), dans lequel une puissance motrice transmise depuis un pignon latéral d'entraînement (12) entrant en contact avec le pignon latéral entraîné (31) est transmise du pignon latéral entraîné (31) au rotor (32).

2. Le générateur électrique de moteur selon la revendication 1, **caractérisé en ce que** le rotor (32) et le pignon latéral entraîné (31) sont constitués séparément.

3. Le générateur électrique de moteur selon la revendication 1 ou 2, **caractérisé en ce que** la surface d'extrémité du rotor (32) dans une direction axiale, l'élément amortisseur (56), et l'élément entraîné (31) sont alignés dans une direction axiale.

4. Le générateur électrique de moteur selon au moins une des revendications 1 à 3, **caractérisé en ce que** une partie de mise en contact (53, 59) entre le rotor (32) et le pignon latéral entraîné (31) est positionné sur un côté d'une partie périphérique extérieure de l'élément amortisseur (56) positionné entre le rotor (32) et l'élément entraîné (31).

5. Le générateur électrique de moteur selon au moins une des revendications 1 à 4, **caractérisé en ce que** l'arbre tournant (34) est soutenu dans sa rotation par un côté de moteur à des emplacements situés à une distance plus longue qu'une longueur axiale du rotor (32).

6. Le générateur électrique de moteur selon la revendication 5, **caractérisé en ce que** l'arbre tournant (34) est emmanché par pression dans le rotor (32).

7. Le générateur électrique de moteur selon au moins une des revendications 1 à 6, **caractérisé en ce que** l'arbre tournant (34) traversant à la fois le rotor (32) et le pignon latéral entraîné (31) est soutenu sur un côté moteur du générateur par les deux côtés de celui-ci.

8. Le générateur électrique de moteur selon au moins une des revendications 1 à 7, **caractérisé en ce que** une partie intérieur de l'arbre tournant (34) comprend un conduit d'huile (44).

9. Le générateur électrique de moteur selon la revendication 8, **caractérisé en ce que** le conduit d'huile (44) s'étend au moins d'une extrémité du rotor (32) sur le côté du pignon latéral entraîné (31) à l'autre extrémité du rotor (32) opposée au pignon latéral entraîné (31).

10. Véhicule, particulièrement une moto, comprenant un moteur (1) et une unité de propulsion (108), **caractérisé par** ce qu'il comprend en outre un générateur électrique de moteur selon au moins une des revendications 1 à 9.
